**Europäisches Patentamt**

**European Patent Office**

**Office européen des brevets**

(19)

(11) Veröffentlichungsnummer : **0 473 999 B1**

(12) **EUROPÄISCHE PATENTSCHRIFT**

(45) Veröffentlichungstag der Patentschrift :
**25.05.94 Patentblatt 94/21**

(51) Int. Cl.$^5$ : **C09D 201/06,** C09D 5/34

(21) Anmeldenummer : **91113813.9**

(22) Anmeldetag : **17.08.91**

(54) **Bindemittelkombinationen und ihre Verwendung in Beschichtungsmitteln und Dichtmassen.**

(30) Priorität : **31.08.90 DE 4027609**

(43) Veröffentlichungstag der Anmeldung :
**11.03.92 Patentblatt 92/11**

(45) Bekanntmachung des Hinweises auf die
Patenterteilung :
**25.05.94 Patentblatt 94/21**

(84) Benannte Vertragsstaaten :
**AT BE CH DE ES FR GB IT LI NL SE**

(56) Entgegenhaltungen :
**DE-A- 3 133 295**
**DATABASE WPI(L) no. 86-096 680 DERWENT**
**PUBLICATIONS LTD., London, GB; & JP-A-61**
**040 355**

(73) Patentinhaber : **BAYER AG**
**D-51368 Leverkusen (DE)**

(72) Erfinder : **Wamprecht, Christian, Dr.**
**Regattastrasse 20**
**W-4040 Neuss 22 (DE)**
Erfinder : **Blum, Harald, Dr.**
**Auf dem Westkamp 1**
**W-4175 Wachtendonk 1 (DE)**
Erfinder : **Pedain, Josef, Dr.**
**Haferkamp 6**
**W-5000 Köln 80 (DE)**

EP 0 473 999 B1

Jouve, 18, rue Saint-Denis, 75001 PARIS

## Beschreibung

Die vorliegende Erfindung betrifft neue Bindemittelkombinationen, bestehend im wesentlichen aus Carbonsäureanhydrid- und Epoxidgruppen enthaltenden Copolymerisaten, sowie organischen Verbindungen, welche mindestens zwei Hydroxylgruppen pro Molekül aufweisen, sowie ihre Verwendung in Beschichtungsmitteln und Dichtmassen.

Die Verwendung von Zweikomponentensystemen, bestehend aus organischen Verbindungen mit mindestens zwei intramolekularen Carbonsäureanhydridgruppen pro Molekül und Polyhydroxylverbindungen, als Bindemittel für Lacke und Beschichtungsmittel ist bereits bekannt.

Die FR-A-2 393 092 beschreibt Beschichtungskompositionen, bestehend aus hydroxyfunktionellen Polymeren und einem Esteranhydrid mit mindestens zwei Anhydridgruppen pro Molekül, wobei das Esteranhydrid ein Derivat von Trimellitsäureanhydrid ist.

Die EP-A-48 128 beschreibt Beschichtungskompositionen, bestehend aus einer Hydroxylkomponente mit mindestens zwei Hydroxylgruppen pro Molekül, einer Anhydridkomponente mit mindestens zwei Anhydridgruppen pro Molekül und gegebenenfalls einer als Katalysator wirkenden Aminkomponente.

Nachteilig bei diesen Systemen erweist sich die für hochwertige Decklackierungen nicht ausreichende Lösungsmittelbeständigkeit.

Auch Bindemittelkombinationen auf Basis von Carboxylgruppen und Epoxidgruppen enthaltenden Bindemittelkomponenten, die sowohl bei Raumtemperatur als auch unter Einbrennbedingungen ausgehärtet werden können, sind bereits bekannt. So beschreiben die DE-A-2 635 177 und DE-A-2 728 459 lösungsmittelarme Einbrennlacke, bestehend aus einem carboxylgruppenhaltigen Polyacrylat, einem Epoxidharz mit mindestens zwei Epoxidgruppen pro Molekül und einem Lösungsmittelgemisch. Nachteilig wirkt sich bei diesen Systemen die schleichende Vorreaktion zwischen freien Carboxyl- und freien Epoxidgruppen aus, was zu einer unzureichenden Standzeit der Lacke führen kann.

Die unter der Nr. WO 84/00768 veröffentlichte internationale Patentanmeldung beschreibt hitzehärtbare Beschichtungskompositionenen, bestehend aus einem Polyacrylat, das Epoxid- und Hydroxylgruppen aufweist, einem speziellen Dicarbonsäureanhydrid und einem Aminharzvernetzer. Die als Härter dienende Anhydrid-Komponente enthält jedoch lediglich eine Carbonsäureanhydridgruppe pro Molekül. Die Systeme müssen im übrigen auch bei Anwesenheit von Härtungskatalysatoren bei hohen Temperaturen (ca. 130°C) ausgehärtet werden. Die unter den Nr. WO 84/00770 bzw. WO 84/00771 veröffentlichten internationalen Patentanmeldungen beschreiben vergleichbare Systeme mit dem Unterschied, daß die erste Komponente nur Hydroxylgruppen aufweist und eine separate, Epoxidgruppen aufweisende Komponente, zusätzlich noch vorliegt.

Ebenfalls bekannt ist die Verwendung von Dreikomponentensystemen, bestehend aus organischen Verbindungen mit mindestens zwei intramolekularen Carbonsäureanhydridgruppen pro Molekül, Polyhydroxylverbindungen und Polyepoxidverbindungen, als Bindemittel für Lacke und Beschichtungsmittel (EP-A-134 691, EP-A-316 874 und EP-A-358 306). Diese Dreikomponentensysteme sind den zuvor zitierten Zweikomponentensystemen bezüglich Lösungsmittelbeständigkeit der Lackfilme überlegen, besitzen jedoch den Nachteil, daß alle drei Komponenten miteinander vollständig verträglich sein müssen, um ein gutes optisches Aussehen des Lackfilms zu gewährleisten. Dieser Umstand schränkt die Variationsbreite der Einzelkomponenten erheblich ein.

Die EP-A-319 864 beschreibt Bindemittelkombinationen, bestehend aus einer Copolymerisat-Komponente mit eingebauten Carbonsäureanhydrid- und eingebauten Epoxidgruppen und einer Polyamin-Komponente mit blockierten Aminogruppen. Von Hydroxylgruppen aufweisenden Komponenten wird in diesem Zusammenhang nicht berichtet

Es war daher die der Erfindung zugrundeliegende Aufgabe, neue Bindemittelkombinationen zur Verfügung zu stellen, deren Aushärtung auf den zwischen Carbonsäureanhydrid-, Hydroxyl- und Epoxidgruppen ablaufenden Additionsreaktionen basiert, die eine für Lackanwendungen ausreichende Standzeit aufweisen, und die je nach Anwendungsbereich bereits bei Raumtemperatur oder aber bei erhöhter Temperatur zu Klaren, farblosen, vergilbungsbeständigen und lösungsmittelfesten Lackfilmen ausgehärtet werden können, und die im übrigen nicht mit den genannten Nachteilen der Systeme gemäß Stand der Technik behaftet sind.

Diese Aufgabe konnte durch die Bereitstellung der nachstehend näher beschriebenen Bindemittelkombinationen gelöst werden.

In den erfindungsgemäßen Bindemittelkombinationen liegt eine Komponente A), die sowohl cyclische Carbonsäureanhydridgruppen als auch freie Epoxidgruppen chemisch gebunden aufweist, und eine Komponente B) vor, die mindestens zwei freie Hydroxylgruppen pro Molekül enthält. Derartige Bindemittelkombinationen sind bisher noch nicht beschrieben worden. Der besondere Vorteil solcher Systeme liegt in der Tatsache, daß die reaktiven Gruppierungen in Form von Carbonsäureanhydrid-, Epoxid- und Hydroxylgruppen in nur zwei Komponenten A) und B) enthalten sind, und daß in der Komponente A) zunächst noch keine freien Carboxylgruppen, welche zur Vernetzung mit den Epoxidgruppen der Komponente A) erforderlich sind, vorliegen, sondern daß diese Carboxylgruppen erst aus der Reaktion der Carbonsäureanhydrid- mit den Hydroxylgruppen der Komponente B) durch Einwirkung von Katalysatoren oder Hitze erzeugt werden.

Somit weisen diese Bindemittelkombinationen eine erheblich bessere Lagerstabilität bei Raumtemperatur auf, als vergleichbare Systeme des Standes der Technik, welche freie Carboxylgruppen enthalten. Ein weiterer Vorteil der erfindungsgemäßen Bindemittelkombinationen besteht darin, daß es sich bei der Vernetzungsreaktion um einen sogenannten "double-cure"-Mechanismus handelt, das heißt, zunächst reagieren die Hydroxylgruppen der Komponente B) mit den Anhydridgruppen der Komponente A) unter Anhydridringöffnung und Ausbildung von Carboxylgruppen. Diese Reaktion stellt schon einen Vernetzungsvorgang dar. Darüber hinaus können jedoch die neu entstandenen Carboxylgruppen mit den Epoxidgruppen der Komponente A) reagieren, was eine zusätzliche Vernetzung zur Folge hat.

Aufgrund der erzielbaren hohen Vernetzungsdichten resultieren aus den erfindungsgemäßen Bindemittelkombinationen Beschichtungen, die ein sehr hohes Niveau bezüglich Chemikalien- und Lösungsmittelbeständigkeit aufweisen.

Gegenstand der Erfindung sind Bindemittelkombinationen, enthaltend

A) 10 bis 99 Gew.-Teile einer Copolymerisat-Komponente, bestehend aus mindestens einem Copolymerisat von olefinisch ungesättigten Verbindungen mit einem als Gewichtsmittel bestimmten Molekulargewicht von 1.500 bis 75.000, welches sowohl

(i) 1 bis 30 Gew.-% an cyclischen Carbonsäureanhydridgruppen (gerechnet als $C_4H_2O_3$) als auch

(ii) 1 bis 29 Gew.-% an Epoxidgruppen (gerechnet als $C_2H_3O$)

chemisch gebunden enthält, und

B) 1 bis 90 Gew.-Teile einer Hydroxyl-Komponente, bestehend aus mindestens einem organischen Polyol mit mindestens zwei Hydroxylgruppen pro Molekül,

mit der Maßgabe, daß auf jede Anhydridgruppe der Komponente A) 0,1 bis 10 Hydroxylgruppen der Komponente B) entfallen.

Gegenstand der Erfindung ist auch die Verwendung dieser Bindemittelkombinationen als Bindemittel für hitzehärtbare, gegebenenfalls Hilfs- und Zusatzmittel der Lacktechnologie enthaltende, Beschichtungsmittel oder Dichtmassen oder als Bindemittel für bei Raumtemperatur, härtbare Katalysatoren und gegebenenfalls weitere Hilfs- und Zusatzmittel der Lacktechnologie enthaltende, Beschichtungsmittel oder Dichtmassen.

Die Copolymerisatkomponente A) besteht aus mindestens einem Copolymerisat, welches sowohl cyclische Carbonsäureanhydridgruppen in einer Menge von 1 bis 30 Gew.-%, vorzugsweise 5 bis 25 Gew.-%, als auch chemisch eingebaute Epoxidgruppen in einer Menge von 1 bis 29 Gew.-%, vorzugsweise 5 bis 15 Gew.-%, enthält. Die Copolymerisate weisen ein, nach der Methode der Gelpermeationschromatographie unter Verwendung von Polystyrol als Standard bestimmbares, Molekulargewicht (Gewichtsmittel) von 1.500 bis 75.000, vorzugsweise 2.000 bis 60.000 und besonders bevorzugt 3.000 bis 40.000, auf.

Es handelt sich bei den Copolymerisaten um solche auf Basis von vorzugsweise einfach olefinisch ungesättigten Monomeren.

Zur Herstellung der Copolymerisate kommen drei Gruppen von olefinisch ungesättigten Monomeren zum Einsatz und zwar

a) Anhydridgruppen enthaltende, olefinisch ungesättigte Monomere,

b) Epoxidgruppen enthaltende, olefinisch ungesättigte Monomere und

c) Anhydrigruppen- und Epoxidgruppen-freie, nichtfunktionelle, olefinisch ungesättigte Monomere.

Die Monomeren a) werden im allgemeinen in einer Menge von 1 bis 30, vorzugsweise 5 bis 25 Gew.-Teilen, die Monomeren b) in einer Menge von 3 bis 96, vorzugsweise 16 bis 50 Gew.-Teilen und die Monomeren c) in einer Menge von 0 bis 96, vorzugsweise 25 bis 79 Gew.-Teilen eingesetzt, mit der Maßgabe, daß die Summe der Gewichtsteile a) bis c) 100 ergibt. Im übrigen werden die Anteile der einzelnen Monomeren in dem der Copolymerisation zuzuführenden Gemisch im Rahmen dieser Offenbarung so bemessen, daß in den Copolymerisaten die obengenannten Mengen an chemisch eingebauten Anhydrid- und Epoxidgruppen vorliegen. Der Gehalt der Copolymerisate an diesen Gruppierungen entspricht dem Gehalt des Monomergemischs an den gleichen Gruppen, da davon ausgegangen werden kann, daß die Copolymerisate bezüglich ihrer chemischen Zusammensetzung der chemischen Zusammensetzung des Monomerengemischs entsprechen.

Bei den Monomeren a) handelt es sich um einfach olefinisch ungesättigte Carbonsäureanhydride wie z.B. Maleinsäureanhydrid oder Itaconsäureanhydrid. Maleinsäureanhydrid ist bevorzugt.

Typische Beispiele für Monomere b) sind z.B. Glycidylacrylat, Glycidylmethacrylat oder Allylglycidylether, wobei die beiden erstgenannten bevorzugt sind.

Die Monomeren c) weisen im allgemeinen ein Molekulargewicht von 86 bis 400 auf. Es handelt sich um die üblichen Anhydridgruppen- und Epoxidgruppen-freien, nichtfunktionellen, vorzugsweise einfach olefi-

EP 0 473 999 B1

nisch ungesättigten Monomeren, wie sie auch bereits bei den Verfahren des obengenannten Standes der Technik als Monomere eingesetzt worden sind.

Typische Beispiele sind Ester der Acryl- und Methacrylsäure wie beispielsweise Methylacrylat, Ethylacrylat, n-Butylacrylat, Isobutylacrylat, tert.-Butylacrylat, 2-Ethylhexylacrylat, Cyclohexylmethacrylat, Methylmethacrylat, n-Butylmethacrylat, Isobutylmethacrylat oder 2-Ethylhexylmethacrylat; Vinylaromaten wie beispielsweise Styrol, Vinyltoluol, α-Methylstyrol, α-Ethylstyrol, kernsubstituierte, gegebenenfalls Isomerengemische darstellende Diethylstyrole, Isopropylstyrole, Burylstyrole und Methoxystyrole; Vinylether wie beispielsweise Ethylvinylether, n-Propylvinylether, Isopropylvinylether, n-Butylvinylether und Isobutylvinylether, Vinylester wie beispielsweise Vinylacetat, Vinylpropionat und Vinylbutyrat.

Bei der Durchführung der Copolymerisation können selbstverständlich jeweils beliebige Gemische der beispielhaft genannten Monomeren a) bis c) verwendet werden.

Die Herstellung der Copolymerisate kann durch Copolymerisation der beispielhaft genannten Monomeren a) bis c) nach üblichen radikalischen Polymerisationsverfahren erfolgen, wie beispielsweise Masse- oder Lösungspolymerisation.

Dabei werden die Monomeren im allgemeinen bei Temperaturen von 60 bis 180°C, vorzugsweise 80 bis 160°C, in Gegenwart von Radikalbildnern und gegebenenfalls Molekulargewichtsreglern copolymerisiert

Die Copolymerisation wird vorzugsweise in inerten Lösungsmitteln durchgeführt. Geeignete Lösungsmittel sind beispielsweise Aromaten wie Benzol, Toluol, Xylol, Ester wie Ethylacetat, Butylacetat, Hexylacetat, Heptylacetat, Methylglykolacetat, Ethylglykolacetat, Methoxypropylacetat, Ether wie Tetrahydrofuran, Dioxan, Diethylenglykoldimethylether, Ketone wie Aceton, Methylethylketon, Methylisobutylketon, Methyl-n-amylketon, Methyl-isoamylketon.

Die Copolymerisation kann kontinuierlich oder diskontinuierlich erfolgen. Üblicherweise wird in einen Polymerisationsreaktor gleichmäßig und kontinuierlich die Monomermischung und der Initiator eindosiert und gleichzeitig die entsprechende Menge Polymerisat kontinuierlich abgeführt.

Vorzugsweise können so chemisch nahezu einheitliche Copolymere hergestellt werden. Chemisch nahezu einheitliche Copolymere können auch hergestellt werden, indem man die Reaktionsmischung mit konstanter Geschwindigkeit in einen Rührkessel einlaufen läßt, ohne das Polymerisat abzuführen.

Man kann auch einen Teil der Monomeren beispielsweise in Lösungsmitteln der genannten Art vorlegen und die restlichen Monomeren und Hilfsmittel getrennt oder gemeinsam in diese Vorlage bei der Reaktionstemperatur eintragen.

Im allgemeinen erfolgt die Polymerisation unter Atmosphärendruck, jedoch sind auch Drücke bis 20 bar anwendbar. Die Initiatoren werden in Mengen von 0,05 bis 15 Gew.-%, bezogen auf die Gesamtmenge der Monomeren, eingesetzt.

Geeignete Initiatoren sind übliche Radikalstarter wie z.B. aliphatische Azoverbindungen wie Azodiisobuttersäurenitril, Azo-bis-2-methylvaleronitril, 1,1'-Azo-bis-1-cyclohexannitril und 2,2'-Azo-bis-isobuttersäurealkylester; symmetrische Diacylperoxide, z.B. Acetyl-, Propionyl- oder Butyrylperoxid, mit Brom-, Nitro-, Methyl- oder Methoxygruppen substituierte Benzoylperoxide, symmetrische Peroxydicarbonate, z.B. Diethyl-, Diisopropyl-, Dicyclohexyl- sowie Dibenzoylperoxydicarbonat; tert.-Butylperoxy-2-ethyl-hexanoat, tert.-Butylperbenzoat; Hydroperoxide wie beispielsweise tert.-Butylhydroperoxid, Cumolhydroperoxid; Dialkylperoxide wie Di-cumylperoxid; tert.-Butylcumylperoxid oder Di-tert.-butylperoxid.

Zur Regelung des Molekulargewichts der Copolymerisate können übliche Regler bei der Herstellung eingesetzt werden. Beispielhaft genannt seien tert.-Dodecylmercaptan, n-Dodecylmercaptan oder Diisopropylxanthogendisulfid.

Die Regler können in Mengen von 0,1 bis 10 Gew.-%, bezogen auf die Gesamtmenge der Monomeren, zugegeben werden.

Die bei der Copolymerisationsreaktion anfallenden Lösungen der Copolymerisate können dann ohne weitere Aufarbeitung zur Herstellung der erfindungsgemäßen Bindemittelkombinationen eingesetzt werden.

Bei den Polyhydroxylverbindungen B) handelt es sich um Verbindungen mit mindestens zwei Hydroxylgruppen pro Molekül, wobei z.B. niedermolekulare aliphatische, cycloaliphatische oder araliphatische Polyole des Molekulargewichtsbereichs 62 bis 500, vorzugsweise 62 bis 261, die 2 bis 6, vorzugsweise 2 bis 4 Hydroxylgruppen pro Molekül enthalten, eingesetzt werden können.

Es ist jedoch ohne weiteres auch möglich, höhermolekulare Polyole des Molekulargewichtsbereichs 500 bis 75.000, vorzugsweise 600 bis 50.000, die eine OH-Zahl von 20 bis 700, vorzugsweise 25 bis 650, aufweisen, zu verwenden.

Weiterhin können auch Mischungen der zuvor genannten niedermolekularen und höhermolekularen Verbindungen eingesetzt werden.

Geeignete niedermolekulare Polyhydroxylverbindungen sind beispielsweise Ethylenglykol, die isomeren Propandiole, Butandiole, Hexandiole, Neopentylglykol, Cyclohexan-1,4-diol, Cyclohexandimethanol, Bis-hy-

4

droxymethyl-hexahydro-4,7-methano-indan, N,N',N''-Tris-(2-hydroxyethyl)-isocyanurat, Polyglykole wie z.B. Diethylenglykol, Triethylenglykol, Tripropylenglykol, Polypropylenglykole, Alkantriole wie z.B. Trimethylolpropan und Glycerin, Alkyltetraole wie Pentaerythrit, Umsetzungsprodukte der zuvor genannten Hydroxylverbindungen mit ε-Caprolacton, hydroxyfunktionelle Polyester oder hydroxyfunktionelle Polyether, soweit sie ein maximales Molekulargewicht von 500 aufweisen. Zu den höhermolekularen Polyhydroxylverbindungen gehören beispielsweise die hydroxylgruppenaufweisenden Polyether- oder Polyester-Polyole der Polyurethanchemie des aus Hydroxylgruppengehalt und Hydroxylfunktionalität berechenbaren Molekulargewichts 500 bis 10.000, vorzugsweise 1.000 bis 7.000 und insbesondere hydroxyfunktionelle Copolymerisate der obengenannten breiten Molekulargewichtsbereiche, wie sie in an sich bekannter Weise durch Copolymerisation von hydroxyfunktionellen Monomeren mit Comonomeren der oben unter c) beispielhaft genannten Art erhalten werden können. Geeignete hydroxyfunktionelle Monomere sind beispielsweise Hydroxyalkyl-(meth)acrylate wie 2-Hydroxyethyl-, 2-Hydroxypropyl-, 1-Methyl-2-hydroxyethyl- und/oder 4-Hydroxybutyl-(meth)acrylat.

Die Mengenverhältnisse der Einzelkomponenten A) und B) werden im allgemeinen so gewählt, daß auf jede Anhydridgruppe der Komponente A) 0,1 bis 10, vorzugsweise 0,5 bis 5 und besonders bevorzugt 0,8 bis 1,5 Hydroxylgruppen der Komponente B) entfallen.

Die erfindungsgemäßen Bindemittelkombinationen stellen wertvolle Bindemittel für Beschichtungsmittel oder Dichtmassen dar. Aufgrund der Reaktionsfähigkeit von cyclischen Carbonsäureanhydridgruppen gegenüber Hydroxylgruppen bei Hitzeeinwirkung und der Reaktionsfreudigkeit der bei dieser Reaktion entstehenden Carbonsäuregruppen gegenüber Epoxidgruppen eignen sich die erfindungsgemäßen Bindemittelkombinationen ohne weitere Zusätze als Bindemittel für hitzehärtbare Beschichtungsmittel oder Dichtmassen, die beispielsweise innerhalb des Temperaturbereichs von 120 bis 200°C innerhalb eines Zeitraums von ca. 10 bis 60 Minuten ausgehärtet werden können. Da in den Bindemittelkombinationen zunächst keine freien Carboxylgruppen vorliegen, weisen sie bei Raumtemperatur eine sehr gute Lagerstabilität auf. Sie können jedoch nach Zusatz von geeigneten Katalysatoren auch als Bindemittel für bei Raumtemperatur aushärtende Beschichtungsmittel und Dichtmassen Verwendung finden.

Hierzu bedarf es einer Katalysatorkomponente C), die die Reaktionsfähigkeit der Säureanhydridgruppen gegenüber den Hydroxylgruppen soweit steigert, daß bereits bei niedrigen Temperaturen, wie z.B. Raumtemperatur, eine Vernetzungsreaktion einsetzt. Solche Katalysatoren sind beispielsweise tert. Aminogruppen enthaltende Verbindungen. Es kann sich dabei um Verbindungen handeln, die entweder gegenüber Säureanhydrid- bzw. Epoxidgruppen inert sind oder aber zusätzlich zur tert. Aminogruppe eine gegenüber Säureanhydrid- bzw. Epoxidgruppen reaktionsfähige Gruppe (Hydroxylgruppe, primäre oder sekundäre Aminogruppe) aufweisen. Im zweiten Fall wird die Katalysatorkomponente c) in die Bindemittelkomponenten A) chemisch eingebaut durch Reaktion ihrer reaktionsfähigen Gruppe mit Epoxid- und/oder Anhydridgruppen unter Ausbildung von sekundären oder tertiären Aminogruppen, verbunden mit der Ausbildung einer zusätzlichen Hydroxylgruppe (aus der Epoxidgruppe) bzw. Halbester- und/oder Halbamidstrukturen (aus der Anhydridgruppe).

Als Katalysatoren geeignete Verbindungen C) sind beispielsweise tert. Amine des Molekulargewichtsbereichs 73 bis 300 wie Ethyldimethylamin, Diethylmethylamin, Triethylamin, Ethyldiisopropylamin, Tributylamin, 1-Methylpyrrolidin, 1-Methylpiperidin, 1,4-Dimethylpiperazin, 1,4-Diazabicyclo(2,2,2)octan oder 1,8-Diazabicyclo-(5,4,0)-undec-7-en, N,N-Dimethylethanolamin, N,N-Diethylpropanolamin, N,N-Dibutylethanolamin, 1-Amino-3-(diethylamino)-propan oder 1-Amino-2-(diethylamino)-ethan. Es können auch beliebige Gemische der beispielhaft genannt tert. Amine als Komponente C) eingesetzt werden.

Weiterhin ist es auch möglich, organische Verbindungen mit mindestens einer tert. Aminogruppen einzusetzen, die ein Molekulargewicht von mehr als 300 besitzen. Solche Substanzen können z.B. Umsetzungsprodukte von olefinisch ungesättigten (Meth)acrylatgruppen aufweisenden Verbindungen mit sekundären Aminen sein, z.B. das Umsetzungsprodukt aus 1 Mol Trimethylolpropantriacrylat und 3 Mol Di-n-butylamin.

Aber auch Umsetzungsprodukte von Polyisocyanaten mit N,N-Dialkylalkanolaminen, wie z.B. das Umsetzungsprodukt aus 1 Mol biuretisiertem Polyisocyanat auf Basis von Hexamethylendiisocyanat und 3 Mol N,N-Dimethylethanolamin, sind geeignet.

Verbindungen, die neben einer tertiären Aminogruppe noch eine Hydroxylgruppe aufweisen, können beispielsweise auch hergestellt werden durch Reaktion von Verbindungen, die eine Epoxidgruppe enthalten, mit sekundären Aminen; z.B. das Umsetzungsprodukt aus Ethylhexylglycidylether und Di-n-butylamin.

Es besteht jedoch auch die Möglichkeit als Komponenten B) solche Polyhydroxylverbindungen einzusetzen, die ihrerseits schon tert. Aminogruppen aufweisen. Im Falle der Verwendung oder Mitverwendung solcher Aminoalkohole erübrigt sich oftmals der Einsatz einer zusätzlichen Katalysatorkomponente C), da die eingebauten tert. Aminstickstoffatome einer solchen Komponente B) als eingebaute Katalysatoren für die Vernetzungsreaktion wirken.

Geeignete tert. Aminstickstoff aufweisende Polyole sind beispielsweise Bis-(2-hydroxyethyl)-methylamin,

EP 0 473 999 B1

Bis-(2-hydroxyethyl)-butylamin, Tris-(2-hydroxyethyl)-amin, Tris-2-(2-hydroxyethoxy)-ethylamin, Bis-(2-hydroxy-propyl)-methylamin, Tris-(2-hydroxypropyl)-amin sowie bevorzugt deren Umsetzungsprodukte mit ε-Caprolacton, Umsetzungsprodukte von höher als difunktionellen Polyhydroxylverbindungen der oben beispielhaft genannten Art mit tert. Stickstoffatomen aufweisenden Monoisocyanaten, beispielsweise Umsetzungsprodukten aus (i) 1 Mol N,N-Dimethylethanolamin mit (ii) 1 Mol 1,6-Diisocyanatohexan, 1-Isocyanato-1-methyl-4(3)-isocyanato-methyl-cyclohexan oder Isophorondiisocyanat oder auch tert. Stickstoffatome aufweisende hydroxyfunktionelle Copolymerisate, beispielsweise solche, die unter Mitverwendung von hydroxyfunktionellen Monomeren wie z.B. 2-Hydroxyethylacrylat und von aminofunktionellen Monomeren wie N,N-Diethylaminoethylmethacrylat hergestellt worden sind; mit einem Dialkylamin wie beispielsweise Dimethylamin umgesetzte hydroxy- und epoxyfunktionelle Polymerisate; in gleicher Weise umgesetzte Polyepoxide; Umsetzungsprodukte aus Substanzen mit einer tertiären und mindestens zwei primären bzw. sekundären Aminogruppen mit cyclischen organischen Carbonaten in einem solchen Verhältnis, daß jede primäre bzw. sekundäre Aminogruppe mit einer Carbonatgruppe zur Reaktion gebracht werden kann, z.B. Umsetzungsprodukte aus (i) 1 Mol Bis-(3-aminopropyl)-methylamin und (ii) 2 Mol Ethylencarbonat Propylencarbonat, Glycerincarbonat oder Alkoxylierungsprodukte von mindestens zwei NH-Bindungen aufweisenden primären und/oder sekundären Mono- oder Polyaminen, wie beispielsweise das Anlagerungsprodukt von 4 bis 5 Mol Propylenoxid an 1 Mol Ethylendiamin oder entsprechend hergestellte, an sich bekannte, höhermolekulare Aminopolyetherpolyole mit eingebauten tert. Stickstoffatomen.

Die Komponente B) kann aus beliebigen Gemischen der beispielhaft genannten stickstoffhaltigen und stickstofffreien Polyhydroxylverbindungen bestehen.

Außer tert. Aminogruppen enthaltenden Verbindungen sind als Katalysatorkomponente C) auch Verbindungen geeignet, die quartäre Ammoniumgruppen enthalten, wie beispielsweise (2-Hydroxyethyl)trimethylammoniumchlorid, Tetrabutylammoniumchlorid, Tetrabutylammoniumbromid, Tetraethylammoniumbromid, Tetrahexylammoniumchlorid.

Es können als Katalysatorkomponente C) jedoch auch Zinnverbindungen wie z.B. Zinndioctoat, Dibutylzinndilaurat, Dibutylzinndiacetat und Dibutylzinndichlorid sowie Phosphorverbindungen wie z.B. Triphenylphosphin eingesetzt werden.

Die die erfindungsgemäßen Bindemittelkombinationen als Bindemittel enthaltenden Beschichtungsmittel oder Dichtmassen können selbstverständlich auch noch weitere Hilfs- und Zusatzmittel D) wie beispielsweise Lösungs- bzw. Verdünnungsmittel, Verlaufshilfsmittel, Antioxidantien, UV-Absorber oder Pigmente enthalten.

Die Herstellung der Beschichtungsmittel oder Dichtmassen erfolgt dergestalt, daß man je nach Anwendungszweck entweder die Ausgangskomponenten A), B), C) und gegebenenfalls D) miteinander vermischt oder nur die Ausgangskomponenten A), B) und gegebenenfalls D) wie nachfolgend beschrieben zur Anwendung bringt. Im Falle der Mitverwendung von Lösungs- bzw. Verdünnungsmittel als Komponente D) können diese bereits der Komponente A), B) und/oder gegebenenfalls C) zugegeben werden. Insbesondere ist eine Ausführungsform denkbar, derzufolge die Lösungs- bzw. Verdünnungsmittel auch schon während der Herstellung der Komponenten A) und B) zugegeben sind, wie dies z.B. bei der Herstellung der Copolymerisate beschrieben worden ist.

Lösungs- bzw. Verdünnungsmittel werden im allgemeinen in solchen Mengen mitverwendet, die zur Einstellung von geeigneten Verarbeitungsviskositäten erforderlich sind. Der Festgehalt, der der erfindungsgemäßen Verwendung zuzuführenden erfindungsgemäßen Kompositionen liegt im allgemeinen zwischen 20 und 80 Gew.-%. Durch Verwendung geeigneter niedermolekularer Copolymerisate ist es jedoch prinzipiell auch möglich, den Lösungs- bzw. Verdünnungsmittelgehalt noch weiter zu reduzieren, und insbesondere im Falle der Herstellung von Dichtmassen unter Verwendung der erfindungsgemäßen Bindemittelkombinationen auf die Mitverwendung von Lösungs- bzw. Verdünnungsmitteln völlig zu verzichten.

Die erfindungsgemäßen Bindemittelkombinationen können direkt, ohne weitere Zusätze, zur Herstellung von klaren Überzügen verwendet werden.

In der Regel werden jedoch die bereits obengenannten, in der Lackindustrie üblichen Hilfs- und Zusatzstoffe D) zugesetzt. Die auf diese Weise erhaltenen, gebrauchsfertigen Systeme können als Beschichtungs- oder Dichtmassen nach bekannten Methoden wie Spritzen, Streichen, Tauchen, Fluten, Gießen, Walzen auf beliebige, gegebenenfalls bereits vorbehandelte Untergründe wie z.B. Metall, Holz, Glas, Keramik, Stein, Beton, Kunststoff, Textilien, Leder, Pappe und Papier aufgetragen werden.

In den nachfolgenden Beispielen beziehen sich alle Angaben in Prozenten und Teilen, falls nicht anders vermerkt, auf das Gewicht.

Beispiele

I    Allgemeine Herstellungsvorschrift für die Anhydrid- und Epoxidgruppen enthaltenden Copolymerisate $A_1$ bis $A_6$ und die Hydroxylgruppen enthaltenden Copolymerisate $B_1$ bis $B_5$

In einem 3-1-Reaktionsgefäß mit Rühr-, Kühl- und Heizvorrichtung wird Teil I vorgelegt und auf Reaktionstemperatur aufgeheizt. Dann werden parallel Teil II (Zugabe über einen Zeitraum von insgesamt 2 Stunden) und Teil III (Zugabe über einen Zeitraum von insgesamt 2,5 Stunden) zudosiert. Anschließend wird 2 Stunden bei der Reaktionstemperatur nachgerührt.

Die Reaktionstemperaturen und Zusammensetzungen der Teile I bis III der Anhydrid- und Epoxidgruppen enthaltenden Copolymerisate $A_1$ bis $A_6$ sind in Tabelle I, zusammen mit den Kenndaten der erhaltenen Produkte, aufgeführt; die entsprechenden Daten für die Hydroxylgruppen enthaltenden Copolymerisate $B_1$ bis $B_5$ sind in Tabelle II zu finden.

EP 0 473 999 B1

<u>Tabelle I:</u> Anhydrid- und Epoxidgruppen enthaltende Copolymerisate (Mengenangaben in g)

| Copolymerisate | $A_1$ | $A_2$ | $A_3$ | $A_4$ | $A_5$ | $A_6$ |
|---|---|---|---|---|---|---|
| **Teil I** | | | | | | |
| Butylacetat | 700 | 700 | 700 | 700 | 700 | 700 |
| **Teil II** | | | | | | |
| Ethylacrylat | | | 234 | | | |
| n-Butylacrylat | | | | | 318 | |
| 2-Ethylhexylacrylat | | | | | | 304 |
| Methylmethacrylat | 644 | 234 | 286 | | | |
| n-Butylmethacrylat | | 299 | | 448 | | |
| Styrol | 311 | 351 | 293 | 293 | 351 | 293 |
| Glycidylmethacrylat | 128 | 170 | 212 | 255 | 297 | 340 |
| Maleinsäureanhydrid | 88 | 117 | 146 | 175 | 205 | 234 |
| **Teil III** | | | | | | |
| tert.-Butylperoxy-2-ethylhexanoat (70 %ig in Isododecan) | 70 | 70 | 70 | 70 | 70 | 70 |
| Butylacetat | 59 | 59 | 59 | 59 | 59 | 59 |
| Polymerisationstemperatur (°C) | 120 | 120 | 120 | 120 | 120 | 120 |
| Festgehalt (%) | 60,1 | 59,8 | 60,8 | 59,9 | 59,2 | 59,4 |
| Viskosität bei 23°C (mPa.s) | 28000 | 18000 | 13000 | 9000 | 17500 | 21400 |

Tabelle II: Hydroxyfunktionelle Copolymerisate (Mengenangaben in g)

| Copolymerisate | B$_1$ | B$_2$ | B$_3$ | B$_4$ | B$_5$ |
|---|---|---|---|---|---|
| **Teil I** | | | | | |
| Butylacetat | 600 | 600 | | | |
| Xylol | | | 580 | 580 | 580 |
| **Teil II** | | | | | |
| n-Butylacrylat | 254 | | 380 | | 380 |
| Methylmethacrylat | 507 | | 348 | | 279 |
| n-Butylmethacrylat | | 507 | | 433 | |
| Styrol | 291 | 470 | | 253 | |
| 2-Hydroxyethylacrylat | | | | | |
| 2-Hydroxyethylmethacrylat | | | | 581 | 608 |
| Hydroxypropylmethacrylat* | 215 | 290 | 539 | | |
| **Teil III** | | | | | |
| tert.-Butylperoxy-2-ethylhexanoat (70 %ig in Isododecan) | 76 | 76 | 75 | 75 | 75 |
| Butylacetat | 57 | 57 | | | |
| Xylol | | | 78 | 78 | 78 |
| Polymerisationstemperatur (°C) | 125 | 125 | 125 | 125 | 125 |
| Festgehalt (%) | 65,2 | 65,2 | 64,6 | 64,9 | 65,9 |
| Viskosität bei 23°C (mPa.s) | 23000 | 44000 | 21100 | 106000 | 5200 |
| OH-Zahl (Lieferform) | 42 | 63 | 105 | 125 | 146 |

*technisches Gemisch aus 1-Methyl-2-hydroxyethyl- und 2-Hydroxypropyl-Isomeren im Verhältnis 1:3.

II    Allgemeine Herstellungsvorschrift für die Hydroxylgruppen enthaltenden Polyester B$_6$ bis B$_{10}$

In einem 2-1-Reaktionsgefäß mit Rühr-, Kühl- und Heizvorrichtung werden die Reaktionskomponenten eingewogen und die angegebene Zeit bei der angegebenen Temperatur gerührt. Der Umsatz wird mit Hilfe einer Festgehaltsbestimmung ermittelt. Der Festgehalt sollte ca. 100 % betragen.

Die Reaktionszeiten, Reaktionstemperaturen sowie die Reaktionskomponenten sind in Tabelle III, zusammen mit den Kenndaten der erhaltenen Produkte, aufgeführt.

9

III Herstellung der erfindungsgemäßen Beschichtungsmittel

a) Filmhärtung unter Einbrennbedingungen

Die Copolymerisate $A_1$ bis $A_6$ werden mit den Polyolen $B_1$ bis $B_{10}$ gemischt und gegebenenfalls durch Zugabe eines organischen Lösungs- bzw. Verdünnungsmittels auf eine verarbeitungsfähige Viskosität ein-

Tabelle III: Hydroxyfunktionelle Polyester (Mengenangaben in g)

| Polyester | $B_6$ | $B_7$ | $B_8$ | $B_9$ | $B_{10}$ |
|---|---|---|---|---|---|
| Trimethylolpropan | 536 | 536 | 536 | | |
| Glycerin | | | | 368 | |
| 1,3,5-Tris(2-hydroxyethyl)isocyanurat | | | | | 522 |
| $\epsilon$-Caprolacton | 684 | 1024 | 1368 | 1368 | 684 |
| Zinndioctoat | 0,6 | 0,8 | 1,0 | 1,2 | 0,6 |
| Reaktionstemperatur (°C) | 150 | 150 | 150 | 150 | 150 |
| Reaktionszeit (h) | 6 | 6 | 6 | 6 | 6 |
| Festgehalt (%) | 99,8 | 99,3 | 98,7 | 99,6 | 99,8 |
| Viskosität bei 23°C (mPa.s) | 2300 | 1700 | 1700 | 2150 | 1052 |
| OH-Zahl | 545 | 430 | 345 | 380 | 275 |

10

gestellt. Die Filme werden mit einem Filmzieher auf Prüfbleche aufgezogen, wobei die Naßfilmstärke 150 µm beträgt. Nach 5 Minuten Ablüften bei Raumtemperatur werden die beschichteten Prüfbleche 30 Minuten bei 125°C gelagert. Danach werden sie auf Raumtemperatur abgekühlt. Man erhält auf diese Weise klare, farblose, vernetzte Lackfilme mit guten optischen und mechanischen Werten.

Die Lösungsmittelfestigkeit wird durch einen Wischtest mit einem Methylisobutylketon (MIBK)-getränkten Wattebausch geprüft. Angegeben wird die Anzahl der Doppelhübe, nach denen der Lackfilm ohne sichtbare Veränderung bleibt. Mehr als 200 Doppelhübe pro Film wurden nicht durchgeführt.

In der folgenden Tabelle IV werden die Zusammensetzungen der Bindemittelkombinationen und die Lösungsmittelfestigkeit als Grad der Vernetzung aufgeführt.

## Tabelle IV

| Verwendungsbeispiel | 1 | 2 | 3 | 4 | 5 | 6 |
|---|---|---|---|---|---|---|
| Copolymerisat | 40,0 g $A_1$ | 40,0 g $A_2$ | 40,0g $A_3$ | 40,0 g $A_4$ | 40,0 g $A_5$ | 40,0 g $A_6$ |
| Polyol | 8,0 g $B_4$ | 12,8 g $B_3$ | 11,4 g $B_5$ | 16,0 g $B_4$ | 37,4 g $B_2$ | 64,0 g $B_1$ |
| Butylacetat | 20,0 g | 20,0 g | 20,0 g | 20,0 g | 30,0 g | 30,0 g |
| MIBK-Wischtest:<br>Anzahl der Doppelhübe: | 200 | 150 | 180 | 180 | 100 | 110 |

EP 0 473 999 B1

**Tabelle IV    (Fortsetzung)**

| Verwendungsbeispiel | 7 | 8 | 9 | 10 | 11 |
|---|---|---|---|---|---|
| Copolymerisat | 40,0 g $A_4$ | 40,0g $A_5$ | 40,0 g $A_6$ | 40,0 g $A_5$ | 40,0 g $A_6$ |
| Polyol | 3,6 g $B_6$ | 5,4 g $B_7$ | 7,6 g $B_8$ | 6.0 g $B_9$ | 9,6 g $B_{10}$ |
| Butylacetat | 20,0 g | 20,0 g | 20,0 g | 40,0 g | 30,0 g |
| MIBK-Wischtest: Anzahl der Doppelhübe: | 200 | 180 | 160 | 200 | 110 |

b) Filmhärtung bei Raumtemperatur

Die Copolymerisate $A_1$ bis $A_6$ werden mit den Polyolen $B_1$ bis $B_{10}$ und einem Katalysator bei Raumtemperatur vermischt und gegebenenfalls durch Zugabe eines organischen Lösungs- bzw. Verdünnungsmittels auf eine verarbeitungsfähige Viskosität eingestellt. Die Filme werden mit einem Filmzieher auf Prüfbleche aufgezogen, wobei die Naßfilmstärke 150 µm beträgt. Die so bei Raumtemperatur aufgezogenen Filme waren alle spätestens nach 60 Minuten klebfrei durchgetrocknet. Nach Alterung, d.h. 24 Stunden Trocknung bei Raumtemperutur, erhält man klare, farblose, vernetzte Filme mit guten optischen und mechanischen Werten.

Die angesetzten Lackmischungen weisen durchweg Standzeiten von mehreren Stunden auf. Die Lösungsmittelfestigkeit wird wie zuvor beschrieben ermittelt.

13

In der folgenden Tabelle V werden die Zusammensetzungen der Bindemittelkombinationen und die Lösungsmittelfestigkeit als Grad der Vernetzung aufgeführt.

Tabelle V

| Verwendungsbeispiel | 12 | 13 | 14 | 15 | 16 | 17 |
|---|---|---|---|---|---|---|
| Copolymerisat | 40,0 g A$_1$ | 40,0 g A$_2$ | 40,0 g A$_3$ | 40,0 g A$_4$ | 40,0 g A$_5$ | 40,0 g A$_6$ |
| Polyol | 8,0 g B$_4$ | 12,8 g B$_3$ | 11,4 g B$_5$ | 16,0 g B$_4$ | 37,4 g B$_2$ | 64,0 g B$_1$ |
| N,N-Dimethylethanolamin | | | | | | 0,2 g |
| Triethylamin | 0,2 g | 0,2 g | 0,2 g | 0,2 g | 0,2 g | |
| Butylacetat | 20,0 g | 20,0 g | 20,0 g | 20,0 g | 20,0 g | 30,0 g |
| MIBK-Wischtest: Anzahl der Doppelhübe | 200 | 140 | 170 | 200 | 100 | 100 |

EP 0 473 999 B1

Tabelle V   (Fortsetzung)

| Verwendungsbeispiel | 18 | 19 | 20 | 21 | 22 |
|---|---|---|---|---|---|
| Copolymerisat | 40,0 g $A_4$ | 40,0 g $A_5$ | 40,0 g $A_6$ | 40,0 g $A_5$ | 40,0 g $A_6$ |
| Polyol | 3,6 g $B_6$ | 5,4 g $B_7$ | 7,6 g $B_8$ | 6,0 g $B_9$ | 9,6 g $B_{10}$ |
| N,N-Dimethylethanolamin | | 0,2 g | 0,2 g | | 0,2 g |
| Triethylamin | 0,2 g | | | 0,2 g | |
| Butylacetat | 20,0 g | 20,0 g | 20,0 g | 20,0 g | 40,0 g |
| MIBK-Wischtest: Anzahl der Doppelhübe | 120 | 90 | 100 | 100 | 160 |

A) 10 bis 99 Gew.-Teile einer Copolymerisat-Komponente, bestehend aus mindestens einem Copolymerisat von olefinisch ungesättigten Verbindungen mit einem als Gewichtsmittel bestimmten Molekulargewicht von 1500 bis 75000, welches sowohl

(i) 1 bis 30 Gew.-% an cyclischen Carbonsäureanhydridgruppen (gerechnet als $C_4H_2O_3$) als auch
(ii) 1 bis 29 Gew.-% an Epoxidgruppen (gerechnet als $C_2H_3O$)

chemisch gebunden enthält, und

B) 1 bis 90 Gew.-Teile einer Hydroxyl-Komponente, bestehend aus mindestens einem organischen Polyol mit mindestens zwei Hydroxylgruppen pro Molekül,

mit der Maßgabe, daß auf jede Anhydridgruppe der Komponente A) 0,1 bis 10 Hydroxylgruppen der Komponente B) entfallen.

2. Bindemittelkombinationen gemäß Anspruch 1, dadurch gekennzeichnet, daß die Copolymerisate der Komponente A) durch radikalisch initiierte Copolymerisation erhaltene Copolymerisate aus

a) 1 bis 30 Gew.-Teilen copolymerisierbaren, Anhydridgruppen enthaltenden Monomeren,
b) 3 bis 96 Gew.-Teilen copolymerisierbaren, Epoxidgruppen enthaltenden Monomeren, sowie
c) 0 bis 96 Gew.-Teilen Anhydridgruppen- und Epoxidgruppen-freien, nichtfunktionellen Monomeren

darstellen, mit der Maßgabe, daß die Summe der Gewichtsteile der Monomeren a) bis c) 100 ergibt.

3. Bindemittelkombinationen gemäß Anspruch 1 oder 2, dadurch gekennzeichnet, daß in den Copolymerisaten der Komponente A) als einpolymerisierte, anhydridfunktionelle Monomere Meleinsäureanhydrid und/oder Itaconsäureanhydrid vorliegen.

4. Bindemittelkombinationen gemäß Anspruch 1 bis 3, dadurch gekennzeichnet, daß in den Copolymerisaten der Komponente A) als einpolymerisierte epoxidfunktionelle Monomere Glycidylacrylat, Glycidylmethacrylat und/oder Allylglycidylether vorliegen.

5. Bindemittelkombinationen gemäß Anspruch 1 bis 4, dadurch gekennzeichnet, daß es sich bei der Komponente B) um hydroxyfunktionelle Copolymerisate handelt.

6. Bindemittelkombinationen gemäß Anspruch 1 bis 4, dadurch gekennzeichnet, daß es sich bei der Komponente B) um hydroxyfunktionelle Polyester handelt.

7. Bindemittelkombinationen gemäß Anspruch 1 bis 4, dadurch gekennzeichnet, daß es sich bei der Komponente B) um hydroxyfunktionelle Polyether handelt.

8. Bindemittelkombinationen gemäß Anspruch 1 bis 4, dadurch gekennzeichnet, daß es sich bei der Komponente B) um organische Verbindungen des Molekulargewichtsbereichs 62 bis 261 mit 2 bis 6 Hydroxylgruppen pro Molekül handelt.

9. Verwendung der Bindemittelkombinationen gemäß Anspruch 1 bis 8 als Bindemittel für hitzehärtbare, gegebenenfalls Hilfs- und Zusatzmittel der Lacktechnologie enthaltende Beschichtungsmittel oder Dichtmassen.

10. Verwendung der Bindemittelkombinationen gemäß Anspruch 1 bis 8, in Kombination mit geeigneten Katalysatoren, als Bindemittel für, Katalysatoren und gegebenenfalls weitere Hilfs- und Zusatzmittel der Lacktechnologie enthaltende, bei Raumtemperatur härtbare Beschichtungsmittel oder Dichtmassen.

## Claims

1. Binder combinations containing

A) 10 to 99 parts by weight of a copolymer component consisting of at least one copolymer of olefinically unsaturated compounds having a weight average molecular weight of 1,500 to 75,000 which contains both

(i) 1 to 30% by weight of cyclic carboxylic anhydride groups (expressed as $C_4H_2O_3$)
and
(ii) 1 to 29% by weight of epoxide groups (expressed as $C_2H_3O$)
in chemically bound form and

B) 1 to 90 parts by weight of a hydroxyl component consisting of at least one organic polyol containing at least two hydroxyl groups per molecule,
with the proviso that, for every anhydride group of component A), there are 0.1 to 10 hydroxyl groups of component B).

2. Binder combinations as claimed in claim 1, characterized in that the copolymers of component A) are copolymers - obtained by radical-initiated copolymerization - of

a) 1 to 30 parts by weight of copolymerizable monomers containing anhydride groups,

b) 3 to 96 parts by weight of copolymerizable monomers containing epoxide groups and

c) 0 to 96 parts by weight of non-functional monomers free from anhydride and epoxide groups,

with the proviso that the sum of the parts by weight of the monomers a) to c) is 100.

3. Binder combinations as claimed in claim 1 or 2, characterized in that maleic anhydride and/or itaconic anhydride is/are present as copolymerized anhydride-functional monomers in the copolymers of component A).

4. Binder combinations as claimed in claims 1 to 3, characterized in that glycidyl acrylate, glycidyl methacrylate and/or allyl glycidyl ether is/are present as copolymerized epoxide-functional monomers in the copolymers of component A).

5. Binder combinations as claimed in claims 1 to 4, characterized in that component B) is a hydroxyfunctional copolymer.

6. Binder combinations as claimed in claims 1 to 4, characterized in that component B) is a hydroxyfunctional polyester.

7. Binder combinations as claimed in claims 1 to 4, characterized in that component B) is a hydroxyfunctional polyether.

8. Binder combinations as claimed in claims 1 to 4, characterized in that component B) is an organic compound having a molecular weight in the range from 62 to 261 and containing 2 to 6 hydroxyl groups per molecule.

9. The use of the binder combinations claimed in claims 1 to 8 as binders for heat-curing coating or sealing compounds optionally containing paint auxiliaries and additives.

10. The use of the binder combinations claimed in claims 1 to 8 in combination with suitable catalysts as binders for room-temperature-curing coating or sealing compounds containing catalysts and, optionally, other paint auxiliaries and additives.

## Revendications

1. Combinaisons de liants contenant

A) de 10 à 99 parties en poids d'un composant de copolymère constitué par au moins un copolymère de composés à insaturation oléfinique ayant un poids moléculaire déterminé comme moyenne pondérale de 1.500 à 75.000, qui contient, liés par voie chimique, aussi bien

(i) de 1 à 30 % en poids de groupes d'anhydrides carboxyliques cycliques (calculés comme $C_4H_2O_3$) que

(ii) de 1 à 29 % en poids de groupes époxy (calculés comme $C_2H_3O$) et

B) de 1 à 90 parties en poids d'un composant hydroxyle constitué par au moins un polyol organique contenant au moins deux groupes hydroxyle par molécule,

avec cette mesure que, pour chaque groupe d'anhydride du composant A), on obtient de 0,1 à 10 groupes hydroxyle du composant B).

2. Combinaisons de liants selon la revendication 1, caractérisées en ce que les copolymères du composant A) représentent des copolymères obtenus par copolymérisation à déclenchement radicalaire, constitués par

a) de 1 à 30 parties en poids de monomères copolymérisables contenant des groupes d'anhydrides,

b) de 3 à 96 parties en poids de monomères copolymérisables contenant des groupes époxy, ainsi que
c) de 0 à 96 parties en poids de monomères non fonctionnels exempts de groupes d'anhydrides et de groupes époxy,

avec cette mesure que la somme des parties en poids des monomères a) à c) donne 100.

3. Combinaisons de liants selon la revendication 1 ou 2, caractérisées en ce que, dans les copolymères, comme monomères anhydride-fonctionnels copolymérisés du composant A), sont présents l'anhydride maléique et/ou l'anhydride itaconique.

4. Combinaisons de liants selon les revendications 1 à 3, caractérisées en ce que, dans les copolymères, comme monomères époxy-fonctionnels copolymérisés du composant A), sont présents l'acrylate de glycidyle, le méthacrylate de glycidyle et/ou l'éther allylglycidylique.

5. Combinaisons de liants selon les revendications 1 à 4, caractérisées en ce que, quant au composant B), il s'agit de copolymères hydroxy-fonctionnels.

6. Combinaisons de liants selon les revendications 1 à 4, caractérisées en ce que, quant au composant B), il s'agit de polyesters hydroxy-fonctionnels.

7. Combinaisons de liants selon les revendications 1 à 4, caractérisées en ce que, quant au composant B), il s'agit de polyéthers hydroxy-fonctionnels.

8. Combinaisons de liants selon les revendications 1 à 4, caractérisées en ce que, quant au composant B), il s'agit de composés organiques du domaine de poids moléculaire de 62 à 261 contenant 2 à 6 groupes hydroxyle par molécule.

9. Utilisation des combinaisons de liants selon les revendications 1 à 8, comme liants pour des agents d'enduction ou des matières d'étanchéification thermodurcissables contenant éventuellement des agents auxiliaires et des additifs de la technologie des laques, des vernis ou des peintures.

10. Utilisation des combinaisons de liants selon les revendications 1 à 8, en combinaison avec des catalyseurs appropriés comme liants pour des agents d'enduction ou des matières d'étanchéification durcissables à la température ambiante contenant des catalyseurs et éventuellement d'autres agents auxiliaires et additifs de la technologie des laques, des vernis ou des peintures.